# EUROPÄISCHE PATENTSCHRIFT

(11) **EP 0 950 673 B1**
(45) Veröffentlichungstag und Bekanntmachung des Hinweises auf die Patenterteilung: **02.07.2003**
(21) Anmeldenummer: 99106276.1
(22) Anmeldetag: 16.04.1999
(51) Int. Cl.: C08F 18/04, C08F 20/18, C12N 11/08, A61L 15/60, A61K 7/00, C02F 1/56, A61K 47/32, D21H 21/22, C04B 35/634, B01D 15/08, C11D 17/00

(54) **Gel-bildendes Polymer und Verfahren zu seiner Herstellung**
Gel forming polymer and process for its manufacturing
Polymère formant un gel et procédé pour le fabriquer

(30) Priorität: 16.04.1998 DE 19816910
(43) Veröffentlichungstag der Anmeldung: 20.10.1999
(73) Patentinhaber: Pasquart AG, 7001 Chur (CH)
(72) Erfinder: Brink, Gunnar, Dr., 80339 München (DE); Brink, Gerhard, Dr., 84489 Burghausen (DE); Gassner, Manuela, 80634 München (DE)
(74) Vertreter: Hofstetter, Alfons J., Dr.rer.nat.

(56) Entgegenhaltungen:
- EP-A- 0 335 703
- EP-A- 0 441 512
- US-A- 4 118 347
- US-A- 4 248 685
- US-A- 5 147 923
- US-A- 5 278 227

## Beschreibung

Die vorliegende Erfindung betrifft ein gel-bildendes Polymer, ein Verfahren zu seiner Herstellung und dessen Verwendung.

Gel-bildende Polymere sind in der Natur bekannt, z. B. Pektinate, Alginate oder Agarose und andere sowie auch Umsetzungsprodukte von natürlichen Polymeren, z. B. Derivate diverser Kohlehydrate sowie von Proteinen. Der Nachteil natürlicher Polymere ist die häufig zu schnelle Zersetzung durch Mikroorganismen, ihre je nach Herkunft und Ernte schwankenden Eigenschaften und die durch unterschiedliche Verfügbarkeit wechselnden Preise. Es sind auch gel-bildende synthetische Polymere auf der Basis von Acrylsäure und hauptsächlich aus Acrylsäure bestehenden Derivaten sowie auf der Basis von Polyethylen- bzw. Polypropylenglykol bekannt.

Nachteilig bei diesen Produkten ist zudem der Preis für Acrylsäure und der daraus hergestellten Produkte, der verbleibende Rest-Monomergehalt und die zu geringe biologische Abbaubarkeit.

Aus der US 4,118,347 ist ein gel-ähnliches Co-Polymer bekannt, das mit Hilfe der Komponenten A und B hergestellt wird. Während die Komponente A einen Glycidylmonovinylester oder einen Glycidylmonovinylether umfasst, besteht die Komponente B aus einem Alkylenglykoldivinylester. Die beiden Komponenten werden durch die Komponente B vernetzt. Diese Komponente wird in einer Menge von 10 bis 90 Mol-% eingesetzt. Bei der Synthese des gelähnlichen Co-Polymers können auch Vinylacetate eingesetzt werden, die bis zu 50% die Komponente A ersetzen, die auch zu 10 bis 90 Mol-% im Polymer enthalten sein kann. Daraus folgt, dass Vinylacetate bis zu 45 Mol-% der eingesetzten Monomere ausmachen können.

In der US 5,278,227 wird die Herstellung eines Klebstoffs beschrieben. Für die Polymerisation dieses Klebstoffs werden unter anderem Alcylacrylate und Vinylester eingesetzt, wobei die Vinylester 2 bis 16 Kohlenstoffatome in der Alcylkette der Säure besitzen und 15 bis 35 Gewichts-% der eingesetzten Monomere bilden.

Der vorliegenden Erfindung liegt die Aufgabe zugrunde, gel-bildende Polymere zur Verfügung zu stellen, die diese Nachteile der bekannten Produkte nicht aufweisen und die in der Lage sind, große Mengen polarer Flüssigkeiten zu speichern, festzuhalten und auch unter bestimmten Bedingungen wieder abzugeben und die je nach Zusammensetzung alkalische oder saure Substanzen, insbesondere Flüssigkeiten, binden können und/oder sogar puffernde Wirkung zeigen.

Zur Lösung dieser Aufgaben dienen die Merkmale der unabhängigen Ansprüche.

Vorteilhafte Ausgestaltungen sind in den ünteransprüchen beschrieben.

Überraschenderweise konnte die Aufgabe mit der Entwicklung und Herstellung von Copolymeren auf der Basis von Alkenylestern gelöst werden, obwohl bisher nur wasserlösliche, und damit nicht gel-bildende Copolymere auf Basis von Ethenylestern bekannt waren, z. B. aus der DE 2 747 182 C1, in der sie als wasserlösliche Bindemittel für Vliesstoffe vorgeschlagen wurden. Dabei enthalten die Alkenylester-Copolymerisate ein oder mehrere Monomere aus der Gruppe der Alkenylester von unverzweigten oder verzweigten Alkylcarbonsäuren mit 1 bis 18 C-Atomen gemäß der Formel: 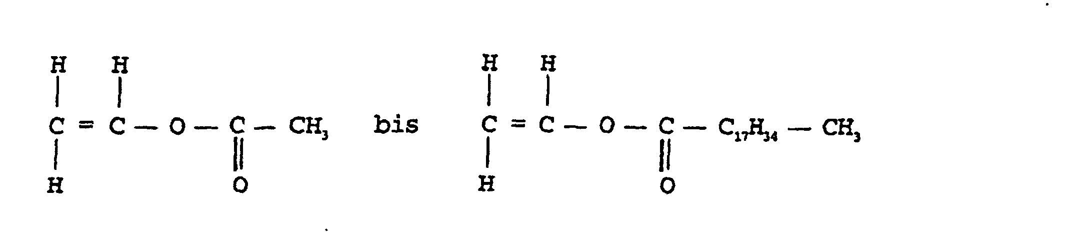 und/oder (Meth)-acrylsäurealkylester mit 3 bis 18 C-Atomen im Alkylrest.

Zudem enthalten die Alkenylester-Copolymerisate 0.1 bis 1,0%, bezogen auf das Gewicht aller eingesetzten Monomeren, doppelt oder mehrfach ungesättigte Verbindungen, die eine Vernetzung des an sich wasserlöslichen Polymeren bewirken. Zudem können die Alkenylester-Copolymerisate 0,5 bis 15%, bezogen auf das Gewicht aller eingesetzten Monomeren, ethylenisch ungesättigter Monound/oder Di-Carbonsäuren mit 3 bis 11 C-Atomen oder Teilester von Poly-Carbonsäuren mit Alkoholen zwischen 1 und 18 C-Atomen und/oder Teilester von gesättigten Polycarbonsäuren mit ethylenisch ungesättigten und mindestens 3 C-Atomen aufweisenden stabilisierend wirkenden Comonomere, wie z. B. Ethenylsulfonat, Acrylsäure, Acrylamid oder N-Methylolacrylamid enthalten.

Die Copolymerisate können auch ethylenisch ungesättigte Protonen-Akzeptoren, z. B. Amino-Gruppen, enthalten, die sauer reagierende Substanzen besonders gut binden können. Für die Polymerisation werden außerdem 0,1 bis 15%, berechnet auf den Feststoffgehalt der fertigen Dispersion oder Suspension, eines wasserlöslichen, biologisch verträglichen Polymeren als Schutzkolloid und gegebenenfalls bis zu 10%, bezogen auf das Gewicht aller eingesetzten Monomeren, ebenfalls biologisch verträglicher Emulgatoren verwendet. Die Schutzkolloide sind dabei Polyvinylalkohole mit einem Verseifungsgrad von 70 bis 97 Mol% und/oder wasserlösliche Cellulosederivate, die durch Carboxymethylierung, Carboxypropylierung, Hydroxypropylierung, Hydroxyethylierung oder Veretherung mit Methylgruppen hergestellt wurden und/oder Dextrane und/oder Polyacrylsäuren und Derivate, Polyacrylamid, wasserlösliche Polyacrylsäure- und Polyacrylamid-Copolymerisate und/oder Gelatine und/oder Kasein und/oder chemisch modifizierte Stärken.
Die biologisch verträglichen, anionischen Emulgatoren sind Alkylsulfite mit bis zu 18 C-Atomen im Alkylrest und/oder Alkylarylpolyethersulfonate mit 6 bis 18 C-Atomen im Alkylrest und mit bis zu 40 Ethylen- oder Propylen-Einheiten und/oder Alkylpolyethersulfate mit 6 bis 18 C-Atomen im Alkylrest und/oder Alkyl- oder Alkylarylsulfonate mit 6 bis 18 C-Atomen und/oder Ester und Halbester der Sulfobernsteinsäure mit einwertigen Alkoholen oder Alkylphenolen.

Die Alkenylester-Copolymerisate können auch zwei- oder mehrsäurige Basen, z.B. Magnesiumoxid oder Zinkoxid als Vernetzungsmittel enthalten.

Des weiteren können die Alkenylester-Copolymerisate nicht-ionische Tenside, wie z. B. Alkylpolyglykolether oder Alkylarylpolyglykolether mit bis zu 40 Glykoleinheiten enthalten.

Die erfindungsgemäßen Copolymere absorbieren polare Flüssigkeiten besonders gut, wenn als Alkenylester Alkenylacetat sowie als ethylenisch ungesättigte Carbonsäure Crotonsäure sowie Hydroxyethyl-Cellulose und/oder Polyvinylalkohol als Schutzkolloid eingesetzt werden. Je nach den copolymerisierten sauren oder basischen Hilfsmonomeren ist die Menge der aufgenommenen polaren Flüssigkeiten über den pH-Wert steuerbar.

Die erfindungsgemäße Herstellung eines gel-bildenden Polymers auf Basis von Alkenylester-Copolymerisaten erfolgt mittels eines Suspensions- oder Dispersions-Polymerisationsverfahrens. Die Verwendung eines Suspensions- oder Dispersions-Polymerisationsverfahrens ist überraschend. Vorteilhafterweise ermöglicht dies die Polymerisation zu höheren Molekulargewichten als bei der Masse-Polymerisation, wie sie für die Polymerisation gel-bildender Polymere bei bekannten Herstellungsverfahren üblich ist. Zudem ermöglicht die Verwendung des Suspensions- oder Dispersions-Polymerisationsverfahrens die verbesserte Reduzierung der Restmonomeren durch den Trocknungsvorgang.

Bevorzugterweise umfaßt das erfindungsgemäße Verfahren folgende Schritte:
a) Lösung von einem oder mehreren Schutzkolloiden in einer wässrigen Phase in einem Reaktionsgefäß;
b) Spülung eines über der wässrigen Phase verbleibenden Luftraums mit Stickstoff;
c) Einbringen eines ersten Teils eines Monomerengemisches bestehend aus Monomeren der Gruppe der Alkenylester von unverzweigten oder verzweigten Alkylcarbonsäuren mit 1 bis 18 C-Atomen gemäß der Formel 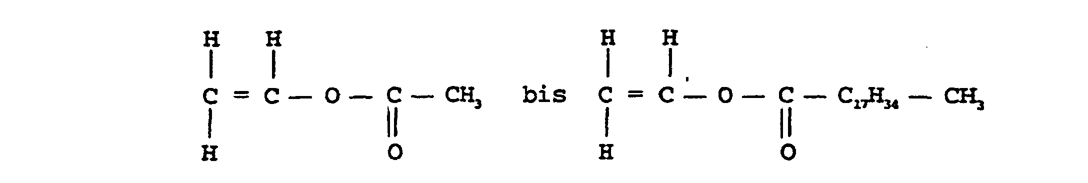 und/oder (Meth) -acrylsäurealkylester mit 3 bis 18 C-Atomen im Alkylrest und ethylenisch ungesättigte Mono- und/oder Di-Carbonsäuren mit 3 bis 11 C-Atomen und/oder Teilester von Poly-Carbonsäuren mit Alkoholen zwischen 1 und 18 C-Atomen und/oder Teilester von gesättigten Polycarbonsäuren mit ethylenisch ungesättigten und mindestens 3 C-Atome aufweisenden, stabilisierend wirkenden Comonomeren sowie einer äquivalenten Menge eines oder mehrerer Vernetzungsmittel als Polymerisationskatalysator in die wäßrige Phase und Erwärmen des Gemisches auf 40 bis 70°C;
d) Zugabe eines Reduktionsmittels bei einer Temperatur zwischen 50 und 55°C;
e) Weitere Erwärmung der Temperatur im Reaktionsgefäß und Zugabe des restlichen Monomerengemisches gemäß Verfahrensschritt c) bei einer Temperatur von mindestens 65°C. Zudem können im Verfahrensschritt a) Emulgatoren zugegeben, und in der wässrigen Phase gelöst werden. Zur Verringerung des Rest-Monomeren-Gehaltes kann ein weiterer Verfahrensschritt f) ausgeführt werden, bei dem eine weitere Temperaturerhöhung im Reaktionsgefäß auf 80 bis 95°C erfolgt. Dabei kann weiteres Reduktionsmittel zugegeben werden. Der Verfahrensschritt f) wird ausgeführt, wenn alle Komponenten des gel-bildenden Polymers zugegeben wurden und die exotherme Reaktion aufgehört hat. Anschließend wird die entstandene Dispersion oder Suspension auf Raumtemperatur abgekühlt. Man erhält Dispersionen oder Suspensionen mit einem Feststoffgehalt von circa 60%.

Wird die Polymerisation so gesteuert, daß Verzweigungen und Pfropfungen bei hohem Molekulargewicht entstehen, kann auf die Zugabe von vernetzenden Monomeren in den Verfahrensschritten c) und e) verzichtet werden.

Bevorzugterweise wird das Monomerengemisch im Verfahrensschritt c) auf 55 bis 65°C erwärmt, das Monomerengemisch im Verfahrensschritt e) auf 75 bis 85°C.

Der für die Durchführung der Polymerisation günstigste pH-Wert liegt zwischen 2,5 und 10, bevorzugt zwischen 4 und 8, und richtet sich auch nach den eingesetzten sauren oder basisch aktiven Co-Monomeren, um die Wasserlöslichkeit der Copolymerisate während der Polymerisation möglichst niedrig zu halten. Der gewünschte pH-Wert wird durch Säuren, Basen und/oder Puffersalze eingestellt. Zur Molekulargewichtseinstellung werden die für die Polymerisation bekannten Regler in geringen Mengen, wie z. B. Mercaptane, Aldehyde oder Chlorkohlenwasserstoffe verwendet. Wurde das Polymer nach dem Suspensions-Verfahren polymerisiert, so wird die Suspension in üblicher Weise gebrochen, das Serum abgetrennt und das verbleibende Polymerisat schonend und unter Vermeidung von Klumpenbildung getrocknet. Je nach den eingesetzten Co-Monomeren ist die Wahl des richtigen pH-Werts beim Brechen der Suspension besonders wichtig. Wenn für die Polymerisation des Dispersions-Verfahren gewählt wurde, dann kann die Dispersion unter Zugabe von weiterem Schutzkolloid und einem Verblockungs-Verhinderungshilfsmittel in einem Sprühturm, wie er für die Erzeugung von Milchpulver seit langem bekannt ist, im Sprühtrocknungsverfahren getrocknet werden. Die Struktur der sprühgetrockneten, gel-bildenden Co-Polymere ist für die Anwendung zur Absorption polarer Flüssigkeiten wegen der entstehenden großen Oberfläche besonders günstig. Eine offenporige, sehr absorptionsfähige Struktur erhält man auch mit der Wirbelschichttrocknung. Das fertige, trockene Produkt kann in jedem beliebigen Behälter, auch im Pulver-Silo, gelagert und versandt werden.

Es ist auch möglich, daß unmittelbar vor dem Trocknen, z.B. dem Wirbelschichttrocknen oder dem Sprühtrocknen, der nicht oder wenig vernetzten Suspension oder Dispersion zwei- oder mehrsäurige Basen zur Vernetzung zugegeben werden.

### Beispiele:

Das erfindungsgemäße Verfahren zur Herstellung der gel-bildenden Polymere wird durch folgende Beispiele näher erläutert, wobei Beispiel 4 lediglich das Verständnis der Erfindung erleichtert und keine Ausführungsart der Erfindung darstellt.

### Beispiel 1:

In einen Polymerisationsreaktor mit Rückflußkühler, drehzahlreguliertem Rührer und beheiz- und kühlbarem Reaktormantel werden 45 Gewichtsteile vollentsalztes Wasser, 1,5 Gewichtsteile Hydroxyethylcellulose, 0,6 Gewichtsteile Laurylethersulfat, 1,4 Gewichtsteile Fettalkoholpolyglucosid und 0,3 Gewichtsteile Fettalkoholpolyglykolether butylverethert sowie 0,4 Gewichtsteile Vinylsulfonat gegeben.

Nach gründlichem Spülen des freien Reaktorraumes mit Stickstoff werden 25 Gewichtsprozent des Monomerengemisches, das aus 50 Gewichtsteilen Ethenylacetat, 1,5 Gewichtsteilen Butylacrylat, 4 Gewichtsteilen Crotonsäure, 0,2 Gewichtsteilen Acrylsäure, 0,2 Gewichtsteilen Acrylamid, 0,08 Gewichtsteilen Diethenylsebacat und 0,4 Gewichtsteilen tert. i-Butylhydroperoxid vorgemischt wurde, in den Reaktor gegeben und das Reaktionsgemisch erwärmt. Bei einer Temperatur zwischen 50 und 55°C wird langsam mit der Zugabe des Reduktionsmittels begonnen, das aus 14 Gewichtsteilen vollentsalztem Wasser, in dem 0,08 Gewichtsteile Natriumformaldehydsulfoxylat (Brüggolit oder Rongalit C) und 0,08 Gewichtsteile Natriumcarbonat gelöst wurden, hergestellt wurde. Die Zugabe soll sich etwa über eine Stunde erstrecken.

Darauf wird der restliche Teil der Monomermischung ab einer Temperatur von 65°C zugegeben und während der Polymerisation die Temperatur im Reaktor vorsichtig auf ca. 85°C gebracht.

Nachdem alle Stoffe zugegeben sind, polymerisiert man noch einundeinhalb bis zwei Stunden bei etwa 80 - 95°C, bevorzugt bei etwa 90°C, unter Zusatz von 0,1 Gewichtsteilen Natriumformaldehydsulfoxylat und vorsichtiger Zugabe von 0,1 Gewichtsteilen tert. i-Butylhydroperoxid nach und kühlt ab. Die Fertigstellung erfolgt wie im Beispiel 2 beschrieben.

### Beispiel 2:

In einen Polymerisationsreaktor mit Rückflußkühler, drehzahlregulierbarem Rührer, Dosiereinrichtungen, Stickstoffeinleitung und beheiz- und kühlbarem Reaktormantel werden 45 Gewichtsteile vollentsalztes Wasser, 2,7 Gewichtsteile Hydroxyethylcellulose, 0,05 Gewichtsprozent eines Alkyl-sulfats und 0,7 Gewichtsteile eines mit durchschnittlich 15 Mol Ethylenoxid veretherten Isotridecylalkohols gegeben.

Nach gründlichem Spülen des freien Reaktorraumes mit Stickstoff, werden 22 Gewichtsprozent des Monomergemisches, das aus 41,2 Gewichtsteilen Ethenylacetat, 0,5 Gewichtsteilen Isononanethenylester, 4,6 Gewichtsteilen n-Butyl-acrylat, 6,8 Gewichtsteilen Crotonsäure, 0,05 Gewichtsteilen Diethenylsebacat, 0,4 Gewichtsteilen Acrylsäure, 0,4 Gewichtsteilen Acrylamid und 0,2 Gewichtsteilen tert. i-Butylhydroperoxid vorgemischt wurde, in den Reaktor gegeben und das Reaktionsgemisch erwärmt. Bei einer Temperatur zwischen 50 und 55°C wird langsam mit der Zugabe des Reduktionsmittels begonnen, das aus 15 Gewichtsteilen vollentsalztem Wasser, in dem 0,08 Gewichtsteile Natriumformaldehydsulfoxylat (Brüggolit oder Rongalit C) und 0,08 Gewichtsteile Natriumcarbonat gelöst sind, hergestellt wurde. Die Zugabe soll sich etwa über eine Stunde erstrecken.

Darauf wird der verbleibende Teil der Monomermischung ab einer Temperatur von etwa 65°C zugegeben, und während der Polymerisation die Temperatur im Reaktor vorsichtig auf 80°± 2°C gebracht. Nachdem alle Stoffe zugegeben sind, polymerisiert man noch einundeinhalb bis zwei Stunden bei etwa 80 - 95°C, bevorzugt bei etwa 90°C, nach und kühlt ab.

Nach der Fertigstellung versetzt man die Dispersion mit einer konzentrierten Lösung von Hydroxyethylcellulose und 1,5% eines feinteiligen, silikatischen Füllstoffs zur Vorbereitung der Sprühtrocknung. Die Menge der Hydroxyethylcellulose hängt vom Molekulargewicht und von der für die Sprühtrocknung im Sprühturm oder im Wirbelschichtverfahren erforderlichen Viskosität ab. Man erhält ein voluminöses, gel-bildendes Pulver, das nach Neutralisation der freien Säuregruppen zur Herstellung von Gelen als "Superabsorbent" eingesetzt werden kann. Kennzeichnend für das Verfahren ist die Polymerisation aus wäßriger Phase, während die Neutralisation entweder als Mischung fertiger Pulver oder durch Zumischen mit biologisch gut verträglichen Oxiden schwacher Basenbildner durch Injektion bei der Wirbelschichttrocknung, durch gasförmige Basenbildner oder in nicht polaren Lösungsmitteln erfolgen kann.

### Beispiel 3:

Wie im Beispiel 2 wurde ein Polymerharz der gleichen Zusammensetzung hergestellt, jedoch eine höhermolekulare Hydroxyethylcellulose zugegeben und auf den Zusatz von Emulgatoren verzichtet und während der Polymerisation die Rührgeschwindigkeit erhöht. Dadurch erhält man eine Polymer-Suspension. Durch Erniedrigung des pH-Wertes und Zugabe von Natriumsulfat kann die Suspension gebrochen werden und das anfallende Präzipitat wird von der wäßrigen Phase abgetrennt und im Drehrohr- oder im Wirbelschichttrockner vorsichtig getrocknet, so daß das Polymer nicht verblockt. Das Polymer wird wie im Beispiel 2 neutralisiert und man erhält wieder ein voluminöses, gel-bildendes Pulver, das zur Herstellung von Gelen, als "Superabsorbent" oder für die anderen, weiter vorn erwähnten Anwendungen eingesetzt werden kann.

### Beispiel 4:

In einem Polymerisationsreaktor mit Rückflußkühler, drehzahlreguliertem Rührer und beheiz- und kühlbarem Reaktormantel werden 45 Gewichtsteile vollentsalztes Wasser, 1,5 Gewichtsteile Hydroxyethylcellulose, 0,8 Gewichtsteile Laurylethersulfat, 1,4 Gewichtsteile Fettalkoholpolyglucosid und 0,3 Gewichtsteile Fettalkoholpolyglykolether endgruppenverschlossen sowie 0,4 Gewichtsteile Vinylsulfonat gegeben.

Nach gründlichem Spülen des freien Reaktorraumes mit Stickstoff werden 25 Gewichtsprozent des Monomerengemisches, das aus 50 Gewichtsteilen Ethenylacetat, 1,5 Gewichtsteilen Butylacrylat, 4 Gewichtsteilen Crotonsäure, 0,2 Gewichtsteilen Acrylsäure, 0,2 Gewichtsteilen Acrylamid und 0,4 Gewichtsteilen tert.-i-Butylhydroperoxid vorgemischt wurde, in den Reaktor gegeben und das Reaktionsgemisch auf 50 bis 55°C erwärmt. Nach Erreichen der Temperatur wird langsam mit der Zugabe des Reduktionsmittels begonnen, das aus 14 Gewichtsteilen vollentsalztem Wasser, in dem 0,08 Gewichtsteile Natriumformaldehydsulfoxylat (Brüggolit oder Rongalit C) und 0,08 Gewichtsteile Natriumcarbonat gelöst wurden, hergestellt wurde. Die Zugabe soll sich etwa über eine Stunde erstrecken.

Darauf wird der restliche Teil der Monomermischung ab einer Temperatur von ca. 65°C zugegeben und während der Polymerisation die Temperatur im Reaktor vorsichtig auf ca. 85°C gebracht.

Nachdem alle Stoffe zugegeben sind, polymerisiert man noch einundeinhalb bis zwei Stunden bei etwa 90°C unter Zusatz von 0,1 Gewichtsteilen Natriumformaldehydsulfoxylat und vorsichtiger Zugabe von 0,1 Gewichtsteilen tert.-i-Butylhydroperoxid nach und kühlt ab.

Die Fertigstellung erfolgt durch Trocknen der entstandenen Polymerdispersion im Sprühturm oder im Wirbelschichttrockner unter Zudosierung einer Suspension von Magnesiumoxid, die auf einen pH-Wert von 8,5 eingestellt wurde, im stöchiometrischen Verhältnis zur Säurezahl der Polymerdispersion. Es entsteht ein gel-bildendes Polymer, das über Magnesiumoxid vernetzt wurde.

Die erfindungsgemäß hergestellten Polymere zeigen Gel-Bildung unter Aufnahme polarer Flüssigkeiten, insbesondere wäßriger Flüssigkeiten. Die Verwendungsmöglichkeiten der erfindungsgemäßen Polymere sind äußerst vielseitig. Insbesondere können die erfindungsgemäßen Polymere als Träger für biologisch aktive Substanzen, als Feuchtigkeitsspeicher, als Superabsorbent, für kosmetische Anwendungen, als Flockungsmittel, als Zusatz für Zahnzemente, für medizinische Anwendungen, als Zusatz zu absorbierenden Papieren, zur Versteifung keramischer Grünkörper, als Affinitätssensoren in der biochemischen Analytik und Affinitätschromatographie und für gel-förmige Tensid-Zubereitungen, wie z. B. als gel-förmiges Reinigungsmittel sowie für gel-förmige Arzneimittelzubereitungen, wie z. B. zur äußerlichen Anwendung als Sprühverband oder für Arzneimittel-Gele gegen Gelenk- oder Muskelschmerzen, verwendet werden.
Die Verwendungsmöglichkeiten des erfindungsgemäßen gel-bildenden Polymers sind jedoch nicht auf die genannten Verwendungsarten und -möglichkeiten beschränkt.

## Patentansprüche

1. Gel-bildendes Polymer,
**dadurch gekennzeichnet,**
**daß** das gel-bildende Polymer auf Alkenylester-Copolymerisaten basiert, wobei die Alkenylester-Copolymerisate ein oder mehrere Monomere aus der Gruppe der Alkenylester von unverzweigten oder verzweigten Alkylcarbonsäuren mit 1 bis 18 C-Atomen gemäß der Formel 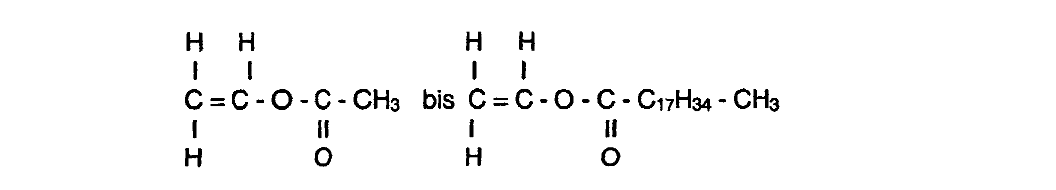 und 0,1 bis 1,0%, bezogen auf das Gewicht aller eingesetzten Monomere, doppelt oder mehrfach ungesättigte Verbindungen als Vernetzungsmittel enthalten.

2. Gel-bildendes Polymer nach Anspruch 1,
**dadurch gekennzeichnet,**
**daß** die Alkenylester-Copolymerisate (Meth)-acrylsäurealkylester mit 3 bis 18 C-Atomen im Alkylrest enthalten.

3. Gel-bildendes Polymer nach Anspruch 1 oder 2,
**dadurch gekennzeichnet,**
**daß** das Vernetzungsmittel Diethenylsebacat, Diethenyladipat, Divinylbenzol oder Hexadien ist.

4. Gel-bildendes Polymer nach einem der vorhergehenden Ansprüche,
**dadurch gekennzeichnet,**
**daß** die Alkenylester-Copolymerisate zwei- oder mehrsäurige Basen als Vernetzungsmittel enthalten.

5. Gel-bildendes Polymer nach einem der vorhergehenden Ansprüche,
**dadurch gekennzeichnet,**
**daß** die Alkenylester-Copolymerisate ethylenisch ungesättigte Mono- und/oder Di-Carbonsäuren mit 3 bis 11 C-Atomen und/oder Teilester von Poly-Carbonsäuren mit Alkoholen zwischen 1 und 18 C-Atomen und/oder Teilester von gesättigten Polycarbonsäuren mit ethylenisch ungesättigten und mindestens 3 C-Atome aufweisenden, stabilisierend wirkenden Comonomeren enthalten.

6. Gel-bildendes Polymer nach Anspruch 5,
**dadurch gekennzeichnet,**
**daß** die ethylenisch ungesättigte Carbonsäure Crotonsäure ist.

7. Gel-bildendes Polymer nach Anspruch 5,
**dadurch gekennzeichnet,**
**daß** das stabilisierend wirkende Comonomer Ethenylsulfonat und/oder Acrylsäure und/oder Acrylamid und/oder N-Methylolacrylamid ist.

8. Gel-bildendes Polymer nach einem der vorhergehenden Ansprüche,
**dadurch gekennzeichnet,**
**daß** die Alkenylester-Copolymerisate ethylenisch ungesättigte Protonen-Akzeptoren enthalten.

9. Gel-bildendes Polymer nach Anspruch 8,
**dadurch gekennzeichnet,**
**daß** die Protonen-Akzeptoren Amino-Gruppen sind.

10. Gel-bildendes Polymer nach einem der vorhergehenden Ansprüche,
**dadurch gekennzeichnet,**
**daß** die Alkenylester-Copolymerisate Schutzkolloide enthalten.

11. Gel-bildendes Polymer nach Anspruch 10,
**dadurch gekennzeichnet,**
**daß** die Schutzkolloide Polyvinylalkohole mit einem Verseifungsgrad von 70 bis 97 Mol% und/oder wasserlösliche Cellulosederivate, die durch Carboxymethylierung, Carboxypropylierung, Hydroxypropylierung, Hydroxyethylierung oder Veretherung mit Methylgruppen hergestellt wurden und/oder Dextrane und/oder Polyacrylsäuren und Derivate, Polyacrylamid, wasserlösliche Polyacrylsäure- und Polyacrylamid-Copolymerisate und/oder Gelatine und/oder Kasein und/oder chemisch modifizierte Stärken sind.

12. Gel-bildendes Polymer nach einem der vorhergehenden Ansprüche,
**dadurch gekennzeichnet,**
**daß** die Alkenylester-Copolymerisate anionische Emulgatoren enthalten.

13. Gel-bildendes Polymer nach Anspruch 12,
**dadurch gekennzeichnet,**
**daß** die anionischen Emulgatoren Alkylsulfite mit bis zu 18 C-Atomen im Alkylrest und/oder Alkylarylpolyethersulfonate mit 6 bis 18 C-Atomen im Alkylrest und mit bis zu 40 Ethylen- oder Propylen-Einheiten und/oder Alkylpolyethersulfate mit 6 bis 18 C-Atomen im Alkylrest und/oder Alkyl- oder Alkylarylsulfonate mit 6 bis 18 C-Atomen und/oder Ester und Halbester der Sulfobernsteinsäure mit einwertigen Alkoholen oder Alkylphenolen sind.

14. Gel-bildendes Polymer nach einem der vorhergehenden Ansprüche,
**dadurch gekennzeichnet,**
**daß** die Alkenylester-Copolymerisate Alkylpolyglucoside als Polymerisationsemulgatoren enthalten.

15. Gel-bildendes Polymer nach einem der vorhergehenden Ansprüche,
**dadurch gekennzeichnet,**
**daß** die Alkenylester-Copolymerisate nichtionische Tenside enthalten.

16. Gel-bildendes Polymer nach Anspruch 15,
**dadurch gekennzeichnet,**
**daß** die nichtionischen Tenside Alkylpolyglykolether oder Alkylarylpolyglykolether mit bis zu 40 Glykoleinheiten sind.

17. Verfahren zur Herstellung eines gel-bildenden Polymers auf Basis von Alkenylester-Copolymerisaten, wobei die Alkenylester-Copolymerisate ein oder mehrere Monomere aus der Gruppe der Alkenylester von unverzweigten oder verzweigten Alkylcarbonsäuren mit 1 bis 18 C-Atomen gemäß der Formel 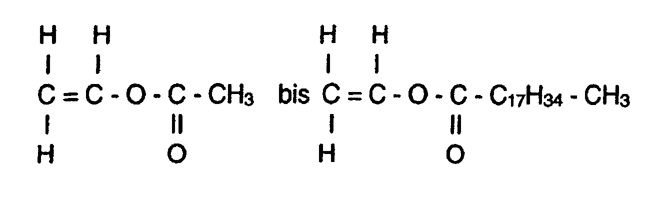 und 0,1 bis 1,0%, bezogen auf das Gewicht aller eingesetzten Monomere, doppelt oder mehrfach ungesättigte Verbindungen als Vernetzungsmittel enthalten und die Herstellung mittels eines Suspensions- oder Dispersions-Polymerisationsverfahren erfolgt.

18. Verfahren nach Anspruch 17,
**dadurch gekennzeichnet,**
**daß** das Verfahren folgende Schritte umfaßt:
a) Lösung von einem oder mehreren Schutzkolloiden in einer wäßrigen Phase in einem Reaktionsgefäß;
b) Spülung eines über der wäßrigen Phase verbleibenden Luftraums mit Stickstoff;
c) Einbringen eines ersten Teils eines Monomerengemisches bestehend aus Monomeren der Gruppe der Alkenylester von unverzweigten oder verzweigten Alkylcarbonsäuren mit 1 bis 18 C-Atomen gemäß der Formel 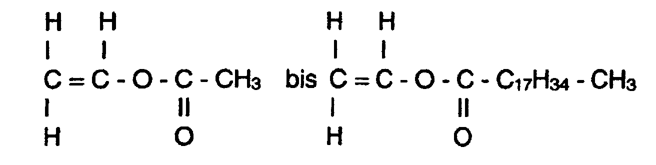 und gegebenenfalls (Meth)-acrylsäurealkylester mit 3 bis 18 C-Atomen im Alkylrest und ethylenisch ungesättigte Mono- und/oder Di-Carbonsäuren mit 3 bis 11 C-Atomen und/oder Teilester von Poly-Carbonsäuren mit Alkoholen zwischen 1 und 18 C-Atomen und/oder Teilester von gesättigten Polycarbonsäuren mit ethylenisch ungesättigten und mindestens 3 C-Atome aufweisenden, stabilisierend wirkenden Comonomeren sowie des Vernetzungsmittels und gegebenenfalls mindestens eines weiteren Vernetzungsmittels als Polymerisationskatalysator in die wäßrige Phase und Erwärmen des Gemisches auf 40 bis 70°C;
d) Zugabe eines Reduktionsmittels bei einer Temperatur zwischen 50 und 55°C;
e) Weitere Erwärmung der Temperatur im Reaktionsgefäß und Zugabe des restlichen Monomerengemisches gemäß Verfahrensschritt c) bei einer Temperatur von mindestens 65°C.

19. Verfahren nach Anspruch 18,
**dadurch gekennzeichnet,**
**daß** im Verfahrensschritt a) Emulgatoren zugegeben und in der wässrigen Phase gelöst werden.

20. Verfahren nach Anspruch 18 oder 19,
**dadurch gekennzeichnet,**
**daß** zur Verringerung des Restmonomerengehaltes in einem weiteren Verfahrensschritt f) eine weitere Temperaturerhöhung im Reaktionsgefäß auf 80 bis 95°C erfolgt.

21. Verfahren nach Anspruch 20,
**dadurch gekennzeichnet,**
**daß** im Verfahrenschritt f) Reduktionsmittel zugegeben wird.

22. Verfahren nach einem der vorhergehenden Ansprüche,
**dadurch gekennzeichnet,**
**daß** das Monomerengemisch im Verfahrensschritt c) auf 55 bis 65°C erwärmt wird.

23. Verfahren nach einem der vorhergehenden Ansprüche,
**dadurch gekennzeichnet,**
**daß** das Monomerengemisch im Verfahrensschritt e) auf 75 bis 85°C erwärmt wird.

24. Verfahren nach einem der vorhergehenden Ansprüche,
**dadurch gekennzeichnet,**
**daß** der pH-Wert des Reaktionsgemisches zwischen 2,5 und 10 beträgt, wobei der pH-Wert durch Säuren, Basen und/oder Puffersalze eingestellt wird.

25. Verfahren nach Anspruch 24,
**dadurch gekennzeichnet,**
**daß** der pH-Wert des Reaktionsgemisches zwischen 4 und 8 beträgt.

26. Verfahren nach einem der vorhergehenden Ansprüche,
**dadurch gekennzeichnet,**
**daß** zur Molekulargewichtseinstellung bei der Polymerisation des Monomerengemisches Mercaptane und/oder Aldehyde und/oder Chlorkohlenwasserstoffe verwendet werden.

27. Verfahren nach einem der vorhergehenden Ansprüche,
**dadurch gekennzeichnet,**
**daß** bei Verwendung des Suspensions-Verfahrens für die Polymerisation die resultierende Suspension gebrochen, das Serum abgetrennt und getrocknet wird.

28. Verfahren nach einem der Ansprüche 17 bis 26,
**dadurch gekennzeichnet,**
**daß** bei Verwendung des Dispersions-Verfahrens für die Polymerisation die Dispersion unter Zugabe eines Schutzkolloids und eines Verblockungs-Verhinderungsmittels in einem Sprühturm im Sprühtrocknungsverfahren getrocknet wird.

29. Verfahren nach einem der Ansprüche 17 bis 26,
**dadurch gekennzeichnet,**
**daß** bei Verwendung des Dispersions-Verfahrens für die Polymerisation die Dispersion mittels einer Wirbelschichttrocknung getrocknet wird.

30. Verfahren nach einem der Ansprüche 17 bis 29,
**dadurch gekennzeichnet,**
**daß** unmittelbar vor einem Trocknen der noch nicht oder nur wenig vernetzten Dispersion oder Suspension mindestens eine zwei- oder mehrsäurige Base zugegeben wird.

31. Verfahren nach Anspruch 30,
**dadurch gekennzeichnet,**
**daß** die Zugabe der zwei- oder mehrsäurigen Base unmittelbar vor dem Wirbelschichttrocknen erfolgt.

32. Verfahren nach Anspruch 30,
**dadurch gekennzeichnet,**
**daß** die Zugabe der zwei- oder mehrsäurigen Base unmittelbar vor dem Sprühtrocknen erfolgt.

33. Verwendung eines gel-bildenden Polymers gemäß einem der Ansprüche 1 bis 16 als Träger für biologisch aktive Substanzen.

34. Verwendung eines gel-bildenden Polymers gemäß einem der Ansprüche 1 bis 16 als Feuchtigkeitsspeicher.

35. Verwendung eines gel-bildenden Polymers gemäß einem der Ansprüche 1 bis 16 als Superabsorbents.

36. Verwendung eines gel-bildenden Polymers gemäß einem der Ansprüche 1 bis 16 für kosmetische Anwendungen.

37. Verwendung eines gel-bildenden Polymers gemäß einem der Ansprüche 1 bis 16 als Flockungsmittel.

38. Verwendung eines gel-bildenden Polymers gemäß einem der Ansprüche 1 bis 16 als Zusatz für Zahnzemente.

39. Verwendung eines gel-bildenden Polymers gemäß einem der Ansprüche 1 bis 16 als Zusatz zu absorbierenden Papieren.

40. Verwendung eines gel-bildenden Polymers gemäß einem der Ansprüche 1 bis 16 zur Versteifung keramischer Grünkörper.

41. Verwendung eines gel-bildenden Polymers gemäß einem der Ansprüche 1 bis 16 als Affinitätssensor in der biochemischen Analytik und Affinitätschromatographie.

42. Verwendung eines gel-bildenden Polymers gemäß einem der Ansprüche 1 bis 16 für gel-förmige Tensidzubereitungen.

43. Verwendung eines gel-bildenden Polymers gemäß einem der Ansprüche 1 bis 16 für gelförmige Arzneimittelzubereitungen

## Claims

1. A gel-forming polymer
**characterized in that**
said gel-forming polymer is based on alkenyl ester copolymers, said alkenyl ester copolymers containing one or plural monomers from the group of alkenyl esters of non-branched or branched alkyl carboxylic acids including 1 to 18 C atoms of the formula 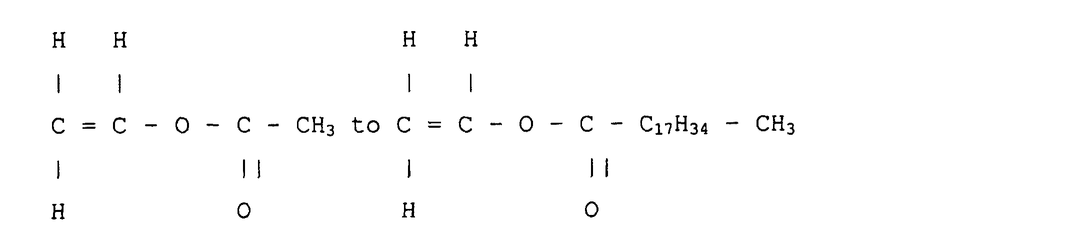 and 0.1 to 1.0%, relating to the weight of all monomers used, of di- or poly-unsaturated compounds as cross-linking agents.

2. The gel-forming polymer as claimed in claim 1
**characterized in that**
said alkenyl ester copolymers contain (meth)acrylic acid alkyl esters including 3 to 18 C atoms in the alkyl residue.

3. The gel-forming polymer as claimed in claims 1 or 2
**characterized in that**
said cross-linking agent is diethenyl sebacate, diethenyl adibate, divinyl benzol or hexadiene.

4. The gel-forming polymer as claimed in one of the preceding
claims
**characterized in that** said alkenyl ester copolymers contain biacid or polyacid bases as cross-linking agents.

5. The gel-forming polymer as claimed in one of the preceding claims
**characterized in that**
said alkenyl ester copolymers contain ethylenically unsaturated mono- and/or dicarboxylic acids including 3 to 11 C atoms and/or partial esters of polycarboxylic acids with alcohols between 1 and 18 C atoms and/or partial esters of saturated polycarboxylic acids with ethylenically unsaturated comonomers including at least 3 C atoms and having a stabilizing effect.

6. The gel-forming polymer as claimed in claim 5
**characterized in that**
said ethylenically unsaturated carboxylic acid is crotonic acid.

7. The gel-forming polymer as claimed in claim 5
**characterized in that**
said comonomer having a stabilizing effect is ethenyl sulfonate and/or acrylic acid and/or acrylamide and/or N-methylol acrylamide.

8. The gel-forming polymer as claimed in one of the preceding claims
**characterized in that**
said alkenyl ester copolymers contain ethylenically unsaturated proton acceptors.

9. The gel-forming polymer as claimed in claim 8
**characterized in that**
said proton acceptors are amino groups.

10. The gel-forming polymer as claimed in one of the preceding claims
**characterized in that**
said alkenyl ester copolymers contain protective colloids.

11. The gel-forming polymer as claimed in claim 10
**characterized in that**
said protective colloids are polyvinyl alcohols of a saponification value of 70 to 97 mol% and/or water-soluble cellulose derivatives which were manufactured by means of carboxymethylation, carboxypropylation, hydroxypropylation, hydroxyethylation or etherification with methyl groups, and/or dextrans and/or polyacrylic acids and derivatives, polyacrylamide, water-soluble polyacrylic acid and polyacrylamide copolymers and/or gelatin and/or casein and/or chemically modified starches.

12. The gel-forming polymer as claimed in one of the preceding claims
**characterized in that**
said alkenyl ester copolymers contain anionic emulsifiers.

13. The gel-forming polymer as claimed in claim 12
**characterized in that**
said anionic emulsifiers are alkyl sulfites having up to 18 C atoms in the alkyl residue, and/or alkylaryl polyether sulfonates having 6 to 18 C atoms in the alkyl residue and up to 40 ethylene or propylene units, and/or alkyl polyether sulfates having 6 to 18 C atoms in the alkyl residue, and/or alkyl or alkylaryl sulfonates having 6 to 18 C atoms, and/or esters and semi-esters of sulfo-succinic acid with monohydric alcohols or alkyl phenols.

14. The gel-forming polymer as claimed in one of the preceding claims
**characterized in that**
said alkenyl ester copolymers contain alkyl polyglucosides as polymerization emulsifiers.

15. The gel-forming polymer as claimed in one of the preceding claims
**characterized in that**
said alkenyl ester copolymers contain non-ionic tensides.

16. The gel-forming polymer as claimed in claim 15
**characterized in that**
said non-ionic tensides are alkyl polyglycol ethers or alkylaryl polyglycol ethers with up to 40 glycol units.

17. A process for manufacturing a gel-forming polymer based on alkenyl ester copolymers, said alkenyl ester copolymers
containing one or plural monomers from the alkenyl ester group of non-branched or branched alkyl carboxylic acids including 1 to 18 C atoms of the formula 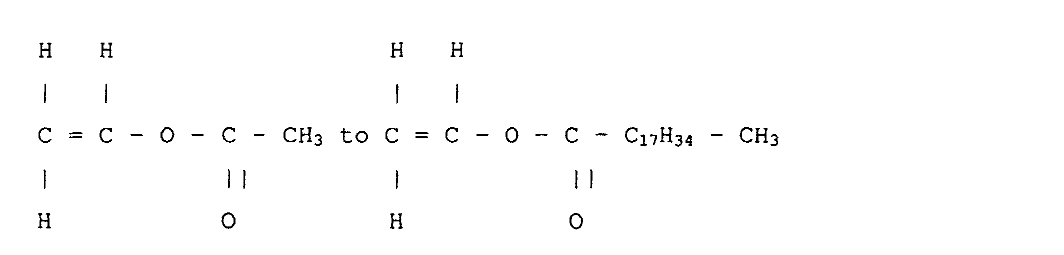 and 0.1 to 1.0%, relating to the weight of all monomers used, of di- or poly-unsaturated compounds as cross-linking agents and manufacture takes place in a suspension- or dispersion-type polymerization process.

18. The process as claimed in claim 17 **characterized in that**
said process comprises the following steps:
a) Dissolving one or plural protective colloids in an aqueous phase in a reaction vessel;
b) nitrogen-rinsing an air space remaining above said aqueous phase;
c) introducing into the aqueous phase, a first portion of a monomer mixture consisting of monomers of the alkenyl ester group of non-branched or branched alkyl carboxylic acids including 1 to 18 C atoms of the formula: 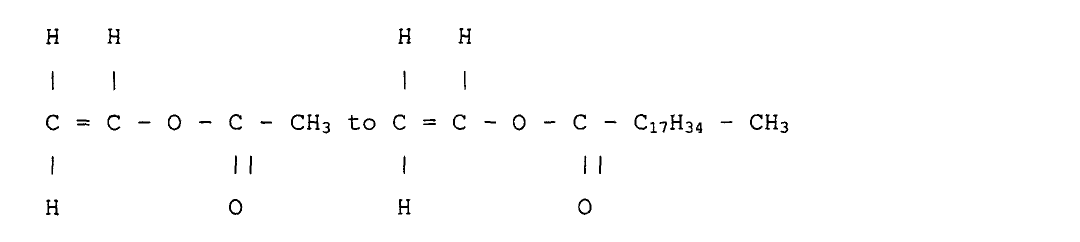 and possibly (meth)acrylic acid alkyl esters including 3 to 18 C atoms in the alkyl residue and ethylenically unsaturated mono- and/or dicarboxylic acids including 3 to 11 C atoms and/or partial esters of polycarboxylic acids with alcohols between 1 and 18 C atoms and/or partial esters of saturated polycarboxylic acids with ethylenically unsaturated comonomers comprising at least 3 C atoms and having a stabilizing effect, as well as the cross-linking agent and possibly at least one additional cross-linking agent as a polymerization catalyst, and heating the mixture to between 40 and 70°C;
d) adding a reducing agent at a temperature of between 50 and 55°C;
e) further increasing the temperature in the reaction vessel and adding the remaining monomer mixture according to procedural step c) at a temperature of at least 65°C.

19. The process as claimed in claim 18
**characterized in that**
in procedural step a) emulsifiers are added and dissolved in said aqueous phase.

20. The process as claimed in claims 18 or 19
**characterized in that**
in a further procedural step f) the reaction vessel temperature is further increased to between 80 and 95°C for reducing the residual monomer content.

21. The process as claimed in claim 20
**characterized in that**
a reducing agent is added in procedural step f).

22. The process as claimed in one of the preceding claims
**characterized in that**
said monomer mixture is heated to between 55 and 65°C in procedural step c).

23. The process as claimed in one of the preceding claims
**characterized in that**
said monomer mixture is heated to between 75 and 85°C in procedural step e).

24. The process as claimed in one of the preceding claims
**characterized in that**
the pH value of the reaction mixture is between 2.5 and 10, said pH value being adjusted by means of acids, bases and/or buffer salts.

25. The process as claimed in claim 24
**characterized in that**
the pH value of the reaction mixture is between 4 and 8.

26. The process as claimed in one of the preceding claims
**characterized in that**
mercaptans and/or aldehydes and/or chlorinated hydrocarbons are used for setting the molecular weight during polymerization of the monomer mixture.

27. The process as claimed in one of the preceding claims
**characterized in that**
when the suspension process is used for polymerization, the resulting suspension is broken, and the serum is separated off and dried.

28. The process as claimed in claims 17 to 26
**characterized in that**
when the dispersion process is used for polymerization, the dispersion is dried in a spray tower using the spray drying process, during which a protective colloid and an anti-blocking agent are added.

29. The process as claimed in claims 17 to 26
**characterized in that**
when the dispersion process is used for polymerization, the dispersion is dried by means of fluidized-bed drying.

30. The process as claimed in claims 17 to 29
**characterized in that**
immediately prior to the drying of the dispersion or the suspension which is not yet or only somewhat cross-linked at that stage, at least one biacid or polyacid base is added.

31. The process as claimed in claim 30
**characterized in that**
said biacid or polyacid base is added immediately prior to the fluidized bed drying process.

32. The process as claimed in claim 30
**characterized in that**
said biacid or polyacid base is added immediately prior to the spray drying process.

33. Use of a gel-forming polymer as claimed in one of claims 1 to 16 as a carrier for biologically active substances.

34. Use of a gel-forming polymer as claimed in one of claims 1 to 16 as a moisture storage.

35. Use of a gel-forming polymer as claimed in one of claims 1 to 16 as a superabsorbent.

36. Use of a gel-forming polymer as claimed in one of claims 1 to 16 in cosmetic applications.

37. Use of a gel-forming polymer as claimed in one of claims 1 to 16 as a flocculant.

38. Use of a gel-forming polymer as claimed in one of claims 1 to 16 as an additive in dental cements.

39. Use of a gel-forming polymer as claimed in one of claims 1 to 16 as an additive in absorbing papers.

40. Use of a gel-forming polymer as claimed in one of claims 1 to 16 for stiffening ceramic green bodies.

41. Use of a gel-forming polymer as claimed in one of claims 1 to 16 as an affinity sensor in biochemical analytics and affinity chromatography.

42. Use of a gel-forming polymer as claimed in one of claims 1 to 16 for gel-type tenside preparations.

43. Use of a gel-forming polymer as claimed in one of claims 1 to 16 for gel-type pharmaceutical preparations.

## Revendications

1. Polymère gélifiant **caractérisé en ce que** le polymère gélifiant repose sur une copolymérisation d'esters d'alcoylène, les copolymères d'ester d'alcoylène contenant un ou plusieurs monomères du groupe d'esters d'alcoyiène des acides carboniques d'alcoylène ramifiés ou non ramifiés possédant 1 ou 18 atomes de carbone selon la formule suivante. 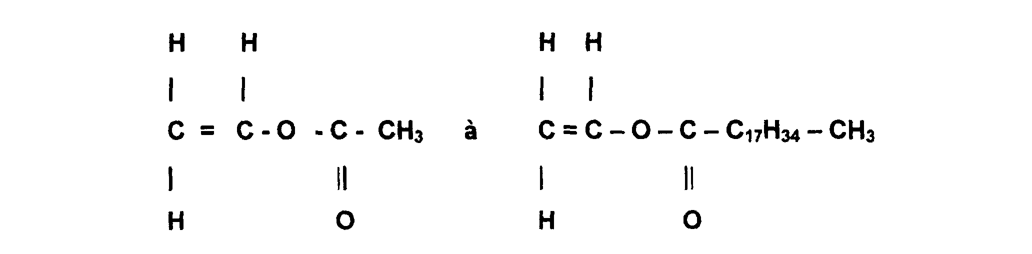 et 0,1 à 1% - rapportés au poids de tous les monomères utilisés - de composés à double ou multiple désaturation servant d'agent de réticulation.

2. Polymère gélifiant selon la revendication 1 **caractérisé en ce que** les copolymères d'esters d'alcoylène contiennent des (méth)acrylates d'alkyle avec 3 à 18 atomes de carbone dans le reste de l'alkyle.

3. Polymère gélifiant selon la revendication 1 ou 2 **caractérisé en ce que** l'agent de réticulation est le diéthényl-sébacate, le diéthényladipate, le divinylbenzène ou les hexadiènes.

4. Polymère gélifiant selon une des revendications précédentes **caractérisé en ce que** les copolymères d'esters d'alcoyiène contiennent des bases bi-ou multi-acides servant d'agent de réticulation.

5. Polymère gélifiant selon une des revendications précédentes **caractérisé en ce que** que les copolymères d'esters d'alcoylène contiennent des acides mono- et/ou di-carboxyliques avec 3 à 11 atomes de carbone et/ou des esters partiels d'acides poly-carboxyliques avec des alcools possédant 1 à 18 atomes de carbone et/ou des esters partiels d'acides poly-carboxyliques saturés avec des co-monomères désaturés de manière éthylénique, à effet stabilisateur et possédant au moins 3 atomes de carbone.

6. Polymère gélifiant selon la revendication 5 **caractérisé en ce que** l'acide carboxylique désaturé de manière éthylénique est l'acide crotonique.

7. Polymère gélifiant selon la revendication 5 **caractérisé en ce que** le comonomère à effet stabilisateur est le sulfonate d'éthylène et/ou l'acide acrylique et/ou l'acrylamide et/ou le N-méthylolacrylamide.

8. Polymère gélifiant selon une des revendications précédentes **caractérisé en ce que** les co-polymères d'ester d'alcoylène renferment des accepteurs de protons désaturés de manière éthylénique.

9. Polymère gélifiant selon la revendication 8 **caractérisé en ce que** les accepteurs de protons sont des groupes amino.

10. Polymère gélifiant selon une des revendications précédentes **caractérisé en ce que** les co-polymères d'ester d'acoylène renferment des colloïdes protecteurs.

11. Polymère gélifiant selon la revendication 10 **caractérisé en ce que** les colloïdes protecteurs sont des alcools polyvinyliques ayant un taux de saponification de 70 à 97 % mol. et/ou des dérivés de cellulose solubles dans l'eau obtenus par carboxyméthylation, carboxypropylation, hydroxypropylation, hydroxyéthylation ou éthérification avec des groupes méthyliques et/ou des dextranes et/ou des acides polyacryliques et dérivés, des polyacrylamides, des copolymères d'acide polyacrylique et de polyacrylamide solubles dans l'eau et/ou des gélatines et/ou des caséines et/ou des amidons modifiés chimiquement.

12. Polymère gélifiant selon une des revendications précédentes **caractérisé en ce que** les co-polymères d'ester d'alcoylène renferment des émulsifiants anioniques.

13. Polymère gélifiant selon la revendication 12 **caractérisé en ce que** les émulsifiants anioniques sont des sulfonates d'alkyle possédant jusqu'à 6 à 18 atomes de carbone dans le reste d'alkyle et/ou des sulfonates-polyéther d'aryle d'alkyle avec 6 à 18 atomes de carbone dans le reste d'alkyle et avec jusqu'à 40 unités d'éthylène ou de propylène et/ou des sulfates-polyéther avec 6 à 18 atomes de carbone dans le reste d'alkyle et/ou des sulfonates d'alkyle ou d'aryle d'alkyle avec 6 à 18 atomes de carbone et/ou des esters ou semi-esters de l'acide sulfo-succinique avec des alcools ou alkyl-phénols monovalents.

14. Polymère gélifiant selon une des revendications précédentes **caractérisé en ce que** les co-polymères d'ester d'alcoylène contiennent des alkyl-poly-glucosides servant d'émulsifiant de polymérisation.

15. Polymère gélifiant selon une des revendications précédentes **caractérisé en ce que** les co-polymères d'ester d'alcoylène contiennent des agents de surface non ioniques.

16. Polymère gélifiant selon la revendication 15 **caractérisé en ce que** les agents de surface non ioniques sont des éthers polyglycoliques d'alkyle ou des éthers polyglycoliques d'aryle d'alkyle avec jusqu'à 40 unités de glycol.

17. Procédé de fabrication d'un polymère gélifiant sur la base de copolymères d'ester d'alcoylène, les copolymères d'ester d'alcoylène renferment un ou plusieurs monomères du groupe des esters d'alcoylène des acides carboxyliques d'alkyle ramifiés ou non ramifiés avec 1 à 18 atomes de carbone selon la formule : 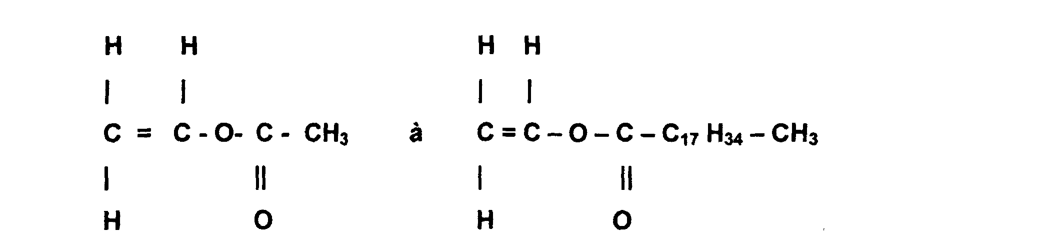 et 0,1 à 1,% - rapportés au poids de tous les monomères utilisés - de composés désaturés de manière double ou multiple servant d'agent de réticulation et la fabrication intervient sur la base d'un procédé de polymérisation par suspension ou dispersion.

18. Procédé selon la revendication 17 **caractérisé en ce que** le procédé comporte les étapes suivantes
a) Solution d'un ou de plusieurs colloïdes protecteurs dans une phase aqueuse à l'intérieur d'un réacteur ;
b) Rinçage avec de l'azote d'un espace d'air restant au-dessus de la phase aqueuse ;
c) Introduction d'une première partie d'un mélange de monomères composé de monomères du groupe d'esters alcoylène d'acides carboxyliques d'alkyle ramifiés ou non ramifiés avec 1 à 18 atomes de carbone selon la formule : 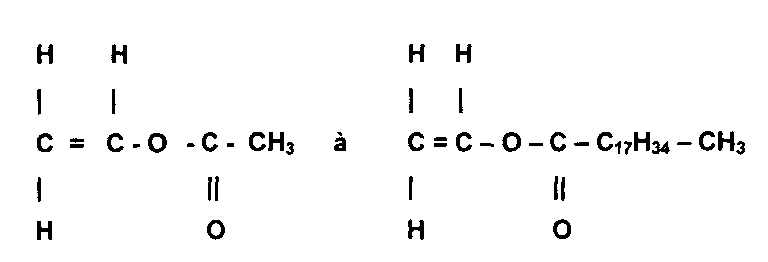 et/ou de (méth-)acrylates d'alkyle avec 3 à 18 atomes de carbone dans le reste d'alkyle et d'acides mono- et/ou di-carboyxliques désaturés de manière éthylénique avec 3 à 11 atomes de carbone et/ou d'esters partiels des acides poly-carboxyliques avec des alcools possédant 1 à 18 atomes de carbone et/ou d'esters partiels des acides poly-carboyxliques saturés avec des co-monomères désaturés de manière éthylénique, à effet stabilisateur et possédant au moins 3 atomes de carbone ainsi que d'agent de réticulation et éventuellement au moins un autre agent de réticulation servant de catalyseur de polymérisation dans la phase aqueuse et réchauffement du mélange à une température comprise entre 40 et 70° C:
d) Ajout d'un agent de réduction à une température comprise entre 50 et 55°C ;
e) Nouvelle augmentation de la température dans le réacteur et ajout du mélange de monomères restant selon l'étape du procédé c) à une température d'au moins 65°C

19. Procédé selon la revendication 18 **caractérisé en ce que** dans l'étape du procédé a) des émulsifiants sont additionnés et dissous dans la phase aqueuse.

20. Procédé selon la revendication 18 ou 19 **caractérisé en ce que** dans une autre étape du procédé f), une nouvelle augmentation de la température comprise entre 80 et 95°C intervient dans le réacteur pour réduire la teneur résiduelle en monomères.

21. Procédé selon la revendication 20 **caractérisé en ce que** l'étape du procédé f) consiste en une addition d'agents de réduction.

22. Procédé selon une des revendications précédentes **caractérisé en ce que** le mélange de monomères est réchauffé à une température comprise entre 55 et 65°C dans l'étape du procédé c).

23. Procédé selon une des revendications précédentes **caractérisé en ce que** le mélange de monomères est réchauffé à une température comprise entre 75 et 85°C dans l'étape du procédé c).

24. Procédé selon une des revendications précédentes **caractérisé en ce que** la valeur pH du mélange de réaction est comprise entre 2,5 et 10, la valeur pH étant réglée par des acides, bases et/ou sels tampon.

25. Procédé selon la revendication 24 **caractérisé en ce que** la valeur pH du mélange de réaction est comprise entre 4 et 8.

26. Procédé selon une des revendications précédentes **caractérisé en ce que** le marcaptan (thioalcool), les aldéhydes ou les hydrocarbures chlorés sont mis en oeuvre pour le réglage du poids moléculaire lors de la polymérisation du mélange de monomères.

27. Procédé selon une des revendications précédentes **caractérisé en ce que** lors de la mise en oeuvre du procédé de suspension pour la polymérisation, la suspension restante est rompue et le sérum est séparé et séché.

28. Procédé selon une des revendications 17 à 26 **caractérisé en ce que** lors de l'utilisation du procédé de dispersion pour la polymérisation, la dispersion est séchée dans une tour de pulvérisation dans un procédé de séchage par pulvérisation avec addition d'un colloïde protecteur et d'un agent inhibiteur de conglomérats.

29. Procédé selon une des revendications 17 à 26 **caractérisé en ce que** lors de l'utilisation du procédé de dispersion pour la polymérisation, la dispersion est séchée par un séchage en lit fluidisé.

30. Procédé selon une des revendications 17 à 29 **caractérisé en ce que** juste avant le séchage de la dispersion ou suspension pas encore réticulée ou peu réticulée, l'on additionne au moins une base bi-ou multi-acide.

31. Procédé selon la revendication 10 **caractérisé en ce que** l'addition de la base bi-ou multi-acide intervient juste avant le séchage en lit fluidisé.

32. Procédé selon la revendication 30 **caractérisé en ce que** l'addition de la base bi-ou multi-acide intervient juste avant le séchage par pulvérisation.

33. Utilisation d'un polymère gélifiant selon une des revendications 1 à 16 comme support pour des substances biologiquement actives.

34. Utilisation d'un polymère gélifiant selon une des revendications 1 à 16 comme réservoir d'humidité.

35. Utilisation d'un polymère gélifiant selon une des revendications 1 à 16 comme super-absorbant.

36. Utilisation d'un polymère gélifiant selon une des revendications 1 à 16 pour des applications cosmétiques.

37. Utilisation d'un polymère gélifiant selon une des revendications 1 à 16 comme floculant.

38. Utilisation d'un polymère gélifiant selon une des revendications 1 à 16 comme additif pour des ciments dentaires.

39. Utilisation d'un polymère gélifiant selon une des revendications 1 à 16 comme additif pour des papiers absorbants.

40. Utilisation d'un polymère gélifiant selon une des revendications 1 à 16 comme renforcement des corps verts céramiques.

41. Utilisation d'un polymère gélifiant selon une des revendications 1 à 16 comme capteur d'affinité pour les analyses biochimiques et la chromatographie d'affinité.

42. Utilisation d'un polymère gélifiant selon une des revendications 1 à 16 pour des préparations d'agents de surface en forme de gel.

43. Utilisation d'un polymère gélifiant selon une des revendications 1 à 16 pour des préparations médicamenteuses en forme de gel.
